(19) Europäisches Patentamt
European Patent Office
Office européen des brevets

(11) **EP 3 890 211 A1**

(12) **EUROPEAN PATENT APPLICATION**
published in accordance with Art. 153(4) EPC

(43) Date of publication:
**06.10.2021 Bulletin 2021/40**

(21) Application number: **19888798.6**

(22) Date of filing: **29.11.2019**

(51) Int Cl.:
***H04B 10/61*** *(2013.01)*

(86) International application number:
**PCT/CN2019/122107**

(87) International publication number:
**WO 2020/108632 (04.06.2020 Gazette 2020/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2018 CN 201811449784**

(71) Applicant: **Sanechips Technology Co., Ltd.
Shenzhen, Guangdong 518055 (CN)**

(72) Inventor: **LI, Yunpeng
Shenzhen, Guangdong 518055 (CN)**

(74) Representative: **Deambrogi, Edgardo et al
Jacobacci & Partners S.p.A.
Corso Emilia 8
10152 Torino (IT)**

(54) **DISPERSION ESTIMATION METHOD, DEVICE, RECEIVER AND STORAGE MEDIUM**

(57) The embodiments of the present disclosure provide a Chromatic Dispersion (CD) estimation method and device, a receiver and a storage medium. The method includes that: frequency-domain data is acquired, and to-be-processed data is obtained according to data of two orthogonal polarized states in the frequency-domain data; the to-be-processed data is filtered to extend a spectral width between adjacent frequency points by a set multiple; a target data set is extracted from the filtered to-be-processed data; and one or more target functions respectively corresponding to one or more set interval values are calculated according to the target data set, and an estimated CD is calculated according to one or more phase angle values corresponding to the one or more target functions.

| | |
|---|---|
| Acquire frequency-domain data, and obtain to-be-processed data according to data of two orthogonal polarized states in the frequency-domain data | 101 |
| Filter the to-be-processed data to extend a spectral width between adjacent frequency points by a set multiple | 103 |
| Extract a target data set from the filtered to-be-processed data | 105 |
| Calculate one or more target functions respectively corresponding to one or more set interval values according to the target data set, and calculate an estimated CD according to one or more phase angle values corresponding to the one or more target functions | 107 |

**Fig. 2**

Printed by Jouve, 75001 PARIS (FR)

## Description

### Cross-Reference to Related Application

The present application claims priority to Chinese Patent Application No. 201811449784.0, submitted to the China National Intellectual Property Administration on November 30, 2018 and entitled "Chromatic Dispersion Estimation Method and Device, Receiver and Storage Medium", the entire contents of which are incorporated herein by reference.

### Technical Field

The present disclosure relates to optical communication technologies, and particularly to a Chromatic Dispersion (CD) estimation method and device, a receiver and a storage medium.

### Background

In recent years, with the constant improvement of the informatisation degree of the society, Internet-Protocol (IP)-based data services have exploded. Particularly, novel applications of different fields such as end-to-end video playing and downloading, Internet Protocol Television (IPTV) networks, mobile Internet and large-scale private networks have become increasingly popular, and transmission bandwidth requirements of metropolitan area networks and backbone networks have kept increasing. Optical fiber communication technology has become the best choice for coping with capacity pressure of backbone networks due to its advantages of ultra-high speed, high capacity, long distance, high anti-interference performance, low cost, etc.

Benefited from the significant progresses of Digital Signal Processing (DSP) and high-speed data collection technologies and related optical devices, data coherent detection technology-based optical fiber communication system becomes a research hot spot in the field of optical communication. A digital coherent detection technology may be combined with a multilevel signal modulation format and a Polarization Multiplexing (PM) technology to improve a communication capacity of a system exponentially. Since 2010, PM-Quadrature Phase Shift Keying (QPSK)-based 100G optical communication modules have gradually been commercialized, and higher single-channels of 400G and even 1T have also become research hot spots.

In an optical fiber transmission system, reducing a transmission bit error rate of an optical fiber channel as much as possible and improving the transmission quality to prolong a signal transmission distance is an important indicator for system designing. Loss, nonlinear effect and CD are main factors influencing the transmission distance. CD in an optical fiber refers to such a phenomenon that different components in an optical pulse signal from a transmitter are transmitted in the optical fiber at different speeds and therefore reach a receiver at different moments. A CD effect blurs the transmitted signal at the receiver after transmission in the optical fiber, and such blurring causes an intersymbol interference and further causes a power penalty. CD is an accumulated effect, and if a transmission link is longer, a CD measure is greater.

In a link without any additional optical-domain CD compensation module, a broad pulse response of an accumulated CD may be dispersed in hundreds and even thousands of code elements, and thus CD compensation is required. In algorithm processing of a coherent receiver, accurate CD compensation may ensure reliable clock recovery and carrier synchronization and is also important to subsequent polarization equalization, while inadequate CD compensation may cause a complete failure of the whole digital coherent receiver. Therefore, accurate CD estimation is a first step for normal operation of a system. In a next-generation optical-switching-based all-optical network, implementing dynamic configuration of light paths is a development trend, namely a signal path between a sender and a receiver may change dynamically, an accumulated CD in a link may change dynamically, a slow estimation process may obviously retard initialization of a subsequent processing module, and thus a dynamic and rapid CD estimation algorithm becomes particularly important. To sum up, it is crucial to estimate a CD accumulated in an optical fiber link accurately in coherent optical communication.

### Summary

For solving the existing technical problem, embodiments of the present disclosure provide a simple, rapid and high-accuracy CD estimation method and device, a receiver and a storage medium.

Technical solutions of the embodiments of the present disclosure are implemented as follows.

A CD estimation method is provided, which may include that: frequency-domain data is acquired, and to-be-processed data is obtained according to data of two orthogonal polarized states in the frequency-domain data; the to-be-processed data is filtered to extend a spectral width between adjacent frequency points by a set multiple; a target data set is extracted from the filtered to-be-processed data; and one or more target functions respectively corresponding to one or more set interval values are calculated according to the target data set, and an estimated CD is calculated according to one or more phase angle values corresponding to the one or more target functions.

A CD estimation device is provided, which may include: a frequency-domain data acquisition module, configured to acquire frequency-domain data and obtain to-be-processed data according to data of two orthogonal polarized states in the frequency-domain data; a filtering module, configured to filter the to-be-processed data to extend a spectral width between adjacent frequency points by a set multiple; an extraction module, configured to extract a target data set from the filtered to-be-processed data; and a CD estimation module, configured to calculate one or more target functions respectively corresponding to one or more set interval values according to the target data set and calculate an estimated CD according to one or more phase angle values corresponding to the one or more target functions.

A coherent receiver for optical communication data is provided, which may include an IQ imbalance compensation module, CD estimation and compensation module, polarization demultiplexing module, carrier recovery module and decision decoding module that are connected in sequence, wherein the CD estimation and compensation module may be configured to implement the CD estimation method of the embodiments of the present disclosure.

A storage medium is provided, in which an executable instruction may be stored, the executable instruction being executed by a processor to implement the CD estimation method of the embodiments of the present disclosure.

According to the CD estimation method and device, the coherent receiver for optical communication data and the storage medium provided in the embodiments, the frequency-domain data is acquired, the to-be-processed data is obtained according to the data of the two orthogonal polarized states in the frequency-domain data, the to-be-processed data is filtered to extend the spectral width between the adjacent frequency points by the set multiple, the target data set is extracted from the filtered to-be-processed data, the one or more target functions respectively corresponding to the one or more set interval values are calculated according to the target data set, and the estimated CD is calculated according to the one or more phase angle values corresponding to the one or more target functions. In such a manner, the data is processed and filtered in a frequency domain, and the spectral width between the frequency points is extended, so that the problem of sensitivity of a system to a sampling spectrum during frequency-domain processing can be solved, and accurate CD estimation can be implemented. The estimated CD is calculated according to the one or more phase angle values corresponding to the one or more target functions, so that calculations of a CD estimation algorithm are reduced, accurate CD estimation is implemented by a relatively simple method, system resources are saved, and power consumption of the system is reduced.

## Brief Description of the Drawings

Fig. 1 is a structure diagram of a coherent receiver for optical communication data according to an embodiment of the present disclosure;

Fig. 2 is a flowchart of a CD estimation method according to an embodiment of the present disclosure;

Fig. 3 is a flowchart of a CD estimation method according to another embodiment of the present disclosure;

Fig. 4 is a flowchart of a CD estimation method according to an exemplary embodiment of the present disclosure;

Fig. 5 is a flowchart of a CD estimation method according to another exemplary embodiment of the present disclosure;

Fig. 6 is a flowchart of a CD estimation method according to another exemplary embodiment of the present disclosure;

Fig. 7 is a flowchart of a CD estimation method according to another exemplary embodiment of the present disclosure; and

Fig. 8 is a structure diagram of a CD estimation device according to an embodiment of the present disclosure.

## Detailed Description of the Embodiments

The technical solutions of the present disclosure will optionally be elaborated below in combination with the drawings and specific embodiments in the specification. Unless otherwise defined, all the technical and scientific terms adopted herein have the same meanings usually understood by those skilled in the art of the present disclosure. The terms adopted in the specification of the present disclosure are only for describing the purposes of specific embodiments and not intended to limit the present disclosure. Term "and/or" adopted herein includes any one and all combinations of one or more related items that are listed.

Expression "some embodiments", involved in the following descriptions, describes a subset of all possible embodiments. However, it should be understood that "some embodiments" may be the same subset or different subsets of all the possible embodiments and may be combined without conflicts.

For estimating a CD accumulated in an optical fiber link rapidly and accurately, the inventor of the present disclosure finds by researches that adaptive CD estimation algorithms provided in a related art mainly include: (1) a CD-scanning-based CD estimation method; (2) a data-aided CD estimation algorithm; and (3) a Godard Clock Tone (GCT) best match-based adaptive CD compensation algorithm. For method (1), i.e., the CD-scanning-based CD estimation method, relatively long time is required to attempt different CDs and monitor a target function, the progress may be limited by the number of attempts, and the accuracy cannot be ensured, so that the CD-scanning-based CD estimation method has the problems of relatively long CD estimation time and relatively low CD estimation accuracy. For method (2), i.e., the data-aided CD estimation algorithm, it is necessary to calculate a CD response of a channel based on a training sequence, namely using priori information of the channel, and then solve a filter coefficient in a time domain or a frequency domain. The two algorithms are relatively low in estimation speed and have influences on speeds of subsequent phase recovery and channel equalization modules, etc. For method (3), i.e., the GCT best match-based adaptive CD compensation algorithm, a periodic signal has a relatively strong spectral component, called GCT, at a clock frequency thereof. An amplitude or power (square of the amplitude) of the GCT is quite sensitive to a residual CD in the signal and may be used as a CD estimation parameter. A GCT best match-based CD estimation method is sensitive to a sampling frequency offset in a high-speed system. Meanwhile, a GCT best match-based CD estimation method in the related art is relatively high in complexity no matter whether a CD scanning manner or direct calculation is adopted.

At a receiver, a broad pulse response of a CD accumulated in long-distance transmission may be dispersed in hundreds and even thousands of code elements and is positively proportional to a square of a signal sampling frequency. Considering the implementation efficiency, a Fast Fourier Transformation (FFT) length during frequency-domain compensation is great. Since the FFT length is relatively great, so that a spectral density is relatively high, and a system is sensitive to a sampling spectrum during frequency-domain processing. Meanwhile, since the FFT length is relatively great, the complexity in calculation is high, and numerous resources are required. Based on this, the inventor of the present disclosure optionally finds by researches that the problem of sensitivity to a sampling spectrum in a CD estimation method can be solved by processing and filtering data in the frequency domain and extending a spectral width between frequency points, and thus provides a simple, rapid and high-accuracy CD estimation method, as well as a CD estimation device, coherent receiver for optical communication data and storage medium configured to implementing the CD estimation method.

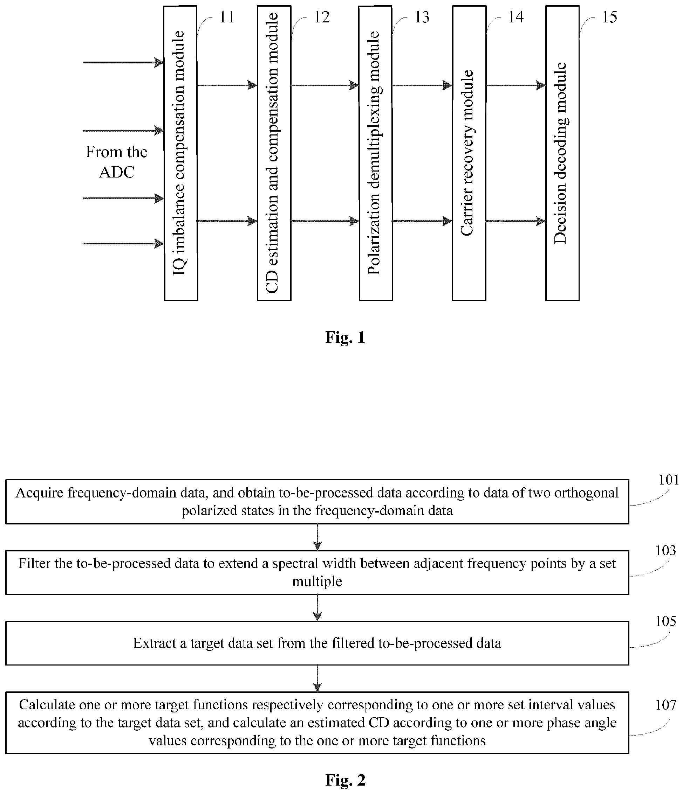

Referring to Fig. 1, an embodiment of the present disclosure provides a coherent receiver for optical communication data, which includes an IQ imbalance compensation module 11, CD estimation and compensation module 12, polarization demultiplexing module 13, carrier recovery module 14 and decision decoding module 15 that are connected in sequence.

The IQ imbalance compensation module 11 is configured to compensate an IQ imbalance. In an analog field of a digital communication receiver adopting baseband sampling, after down conversion is performed on a radio frequency or intermediate frequency signal to obtain a baseband signal, the baseband signal is converted into a digital signal through an Analog-to-Digital Converter (ADC). In such case, the signal may be separated into an in-phase signal and an orthogonal signal when down conversion is performed to obtain the baseband signal, which is implemented using two sine waves (optionally cosine and sine waves) of which gains are the same and phases differ by 90 degrees by a local oscillator. However, these processes are executed in the analog field, so that errors may be generated. Particularly, gain and phase errors may be generated between the cosine wave and sine wave for down conversion, and in such case, these errors may affect the performance of the receiver severely. This is called IQ imbalance.

The CD estimation and compensation module 12 is configured to perform CD estimation using a data stream for CD compensation in a receiver system and apply an estimated CD to CD compensation of the system.

The polarization demultiplexing module 13 is configured to implement a polarization demultiplexing technology. PM refers to simultaneously transmitting two beams of light with the same or different wavelengths independently in the same optical fiber, thereby improving an information transmission capability of the optical fiber once without any additional bandwidth resource. The demultiplexing technology refers to separating originally multiplexed signals at a receiver to achieve a purpose of effective utilization after multiple paths of signals are combined at a signal sender according to different methods or distinguishing manners and transmitted through the same channel. A demultiplexing manner mainly includes direct detection and coherent detection.

The carrier recovery module 14 is configured to perform carrier recovery to recover an original carrier from a modulated signal. There are mainly two carrier recovery methods. One is that a digital signal sequence and a carrier or a pilot signal related to the carrier are simultaneously sent at a sender and the carrier may be extracted directly at a receiver using a narrow-band filter or a phase-locked loop. The other is that a received signal is a modulated signal of a carrier is suppressed and a coherent carrier is obtained by performing nonlinear transformation on the digital signal or using a special phase-locked loop.

The decision decoding module 15 is configured to implement optimal or approximately optimal decoding on an error-correcting code. Decision decoding mainly includes soft decision decoding and hard decision decoding. Soft decision decoding refers to implementing decoding on the error-correcting code using digital data. Hard decision decoding refers to decoding the error-correcting code by a decoder using an algebra structure of the code.

Referring to Fig. 2, an embodiment of the present disclosure provides a CD estimation method, which may be applied to a receiver shown in Fig. 1. In some exemplary implementations, the CD estimation method provided in the embodiment of the present disclosure may be applied to CD estimation in a CD estimation and compensation module in a receiver system. The CD estimation method includes the following operations.

In operation 101, frequency-domain data is acquired, and to-be-processed data is obtained according to data of two orthogonal polarized states in the frequency-domain data.

Herein, the frequency-domain data may be existing frequency-domain data in CD compensation and may also be frequency-domain data obtained by performing frequency-domain conversion on time-domain data. The data of the two orthogonal polarized states are independent of each other. The operation that the receiver acquires the frequency-domain data and obtains the to-be-processed data according to the data of the two orthogonal polarized states in the frequency-domain data refers to that the receiver acquires the frequency-domain data and pre-processes the frequency-domain data to separate, by the pre-processing, the data of the two polarized states that are independent of each other as to-be-processed data respectively; or to linearly combine, by the pre-processing, the data of the two polarized states that are independent of each other to form multiple paths of linearly combined to-be-processed data with each path including two polarized-state components. The operation that frequency-domain conversion is performed on the time-domain data to obtain the frequency-domain data can be implemented by FFT. The data of the two polarized states may be represented by X[K] and Y[K] respectively.

In operation 103, the to-be-processed data is filtered to extend a spectral width between adjacent frequency points by a set multiple.

The to-be-processed data is filtered for a purpose of extending a spectral range corresponding to the frequency points to improve a capability of resisting a sampling frequency offset. The set multiple by which the spectral width between the adjacent frequency points is to be extended may be set by configuring a filter coefficient. The set multiple may be obtained by pre-calculation or simulation, and may alternatively be preset according to an empirical value. For example, the set multiple may be 2 or 3 (i.e., twice or three times). It is to be noted that two or more than two sets of to-be-processed data are usually obtained according to operation 101 and, correspondingly, subsequent processing such as filtering over the to-be-processed data is performed on each set of to-be-processed data independently.

In operation 105, a target data set is extracted from the filtered to-be-processed data.

Herein, extraction from the filtered to-be-processed data refers to dividing data output by filtering into multiple sets and extracting one set from the multiple sets. Extraction may be performed on the to-be-processed data output by filtering according to the set filter coefficient for filtering. It is to be noted that two or more than two sets of to-be-processed data are usually obtained according to operation 101, subsequent processing such as filtering over the to-be-processed data is performed on each set of to-be-processed data independently and, correspondingly, extraction from the filtered to-be-processed data is also performed on each set of to-be-processed data independently.

In operation 107, one or more target functions respectively corresponding to one or more set interval values are calculated according to the target data set, and an estimated CD is calculated according to one or more phase angle values corresponding to the one or more target functions.

In some exemplary implementations, there may be multiple set interval values, and the target function includes multiple target functions corresponding to the set interval values respectively. In this case, the operation that the receiver calculates the one or more target functions respectively corresponding to the one or more set interval values according to the target data set and calculates the estimated CD according to the one or more phase angle values corresponding to the one or more target functions includes that: the receiver calculates phase angle values of the target functions respectively and performs merging processing on the phase angle values of the target functions corresponding to the multiple set interval values respectively to obtain a final phase angle value corresponding to the target functions, and calculate the estimated CD based on the final phase angle value.

In the embodiments, according to the CD estimation method, the frequency-domain data is acquired, the to-be-processed data is obtained according to the data of the two orthogonal polarized states in the frequency-domain data, the to-be-processed data is filtered to extend the spectral width between the adjacent frequency points by the set multiple, the target data set is extracted from the filtered to-be-processed data, the one or more target functions respectively corresponding to the one or more set interval values are calculated according to the target data set, and the estimated CD is calculated according to the one or more phase angle values corresponding to the one or more target functions. In such a manner, the data is processed and filtered in a frequency domain, and the spectral width between the frequency points is extended, so that the problem of sensitivity of a system to a sampling spectrum during frequency-domain processing can be solved, and accurate CD estimation can be implemented. The estimated CD is calculated according to the one or more phase angle values corresponding to the one or more target functions, so that calculations of a CD estimation algorithm are reduced, accurate CD estimation is implemented by a relatively simple method, system resources are saved, and power consumption of the system is reduced.

In some embodiments, the operation that the frequency-domain data is acquired and the to-be-processed data is obtained according to the data of the two orthogonal polarized states in the frequency-domain data includes that:

X-polarized-state data in the frequency-domain data is separated according to odd and even indexes respectively, Y-polarized-state data in the frequency-domain data is separated according to odd and even indexes respectively, and the X-polarized-state data and the Y-polarized-state data are pre-processed by negating the frequency-domain data with the even indexes and keeping the frequency-domain data with the odd indexes unchanged; and

the pre-processed X-polarized-state data and the pre-processed Y-polarized-state data are determined as the to-be-processed data respectively, or, a linear combination operation is performed on the pre-processed X-polarized-state data and the pre-processed Y-polarized-state data to obtain multiple sets of to-be-processed data.

Herein, the operation that the frequency-domain data is pre-processed to obtain the to-be-processed data may be implemented in the following manner. The X-polarized-state data is separated according to the odd and even indexes respectively, the Y-polarized-state data in the acquired frequency-domain data is separated according to the odd and even indexes respectively, and the X-polarized-state data and the Y-polarized-state data are pre-processed by multiplying all the frequency-domain data with the even indexes by -1 and keeping the frequency-domain data with the odd indexes unchanged. For example, for the X-polarized-state data, the X-polarized-state data is pre-processed by multiplying the frequency-domain data with the even indexes in the X-polarized-state data by -1 and keeping the frequency-domain data with the odd indexes unchanged, which may be represented by the following formula: X' [$K$] = $X[K]$ * (-1)$^K$, where $K$ = 0, 1, ... $N$ - 1, N being a length of the frequency-domain data. Two polarized states are independent of each other, and the pre-processed X-polarized-state data X[K] and the pre-processed Y-polarized-state data Y[K] are determined as two sets of to-be-processed data respectively, or, the linear combination operation is performed on the pre-processed X-polarized-state data X[K] and the pre-processed Y-polarized-state data Y[K] to obtain the multiple sets of to-be-processed data in multiple different directions.

In some embodiments, the operation that the linear combination operation is performed on the pre-processed X-polarized-state data and the pre-processed Y-polarized-state data to obtain the multiple sets of to-be-processed data includes that:

the X-polarized-state data or the Y-polarized-state data is determined as first to-be-processed data;

the X-polarized-state data and the Y-polarized-state data are negated, and a sum of the negated X-polarized-state data and the negated Y-polarized-state data is determined as second to-be-processed data; and

the X-polarized-state data and the Y-polarized-state data are negated and a complex number, which takes the negated X-polarized-state data as a real part and the negated Y-polarized-state data as an imaginary part, is determined as third to-be-processed data.

Herein, the linear combination operation mainly includes performing negation, linear addition and complex number addition on the corresponding polarized-state data, thereby obtaining three sets of to-be-processed data including the X-polarized-state data and/or the Y-polarized-state data in three different directions. In some exemplary implementations, the first to-be-processed data $X_1[K]$ is obtained by negating the X-polarized-state data or the Y-polarized-state data. For example, in case of the X-polarized-state data, the first to-be-processed data may be obtained through the following formula:

$$X_1[K] = X'[K].$$

The second to-be-processed data $X_2[K]$ may be obtained by negating the X-polarized-state data and the Y-polarized-state data and then performing linear addition, and may be obtained through the following formulae:

$$Y'[K] = Y[K] * (-1)^K,$$

and

$$X_2[K] = X'[K] + Y'[K].$$

The third to-be-processed data $X_3[K]$ may be obtained by negating the X-polarized-state data and the Y-polarized-state data and then performing complex number addition, and may be obtained through the following formula:

$$X_3[K] = X'[K] + jY'[K],$$

where j is an imaginary unit.

It is to be noted that, in a calculation process of performing the linear combination operation on the X-polarized-state data and the Y-polarized-state data to obtain the multiple sets of to-be-processed data, the X-polarized-state data and the Y-polarized-state data may be interchanged. For example, the first to-be-processed data may be the Y-polarized-state data Y[K], and the third to-be-processed data may be determined to be a complex number obtained by taking the negated Y-polarized-state data as the real part of the complex number and taking the X-polarized-state data as the imaginary part of the complex number.

In the embodiment, the linear combination operation is performed on the X-polarized-state data and the Y-polarized-state data to obtain the to-be-processed data in the three different directions to execute CD estimation respectively, so that influences of polarization CD on CD estimation may be avoided.

In some embodiments, the operation that the to-be-processed data is filtered to extend the spectral width between the adjacent frequency points by the set multiple includes that:

a window function is determined according to a length of the frequency-domain data and the set multiple by which the spectral width between the adjacent frequency points is to be extended; and

a frequency-domain filter coefficient is determined according to a frequency-domain convolution corresponding to a result of exerting the window function to time-domain data corresponding to the frequency-domain data, and the to-be-processed data is filtered according to the frequency-domain filter coefficient.

Herein, the frequency-domain filter coefficient is determined according to a frequency-domain convolution corresponding to a result of exerting the window function of a specified length to the time-domain data corresponding to the frequency-domain data. For example, the length of the frequency-domain data is N, and the set multiple by which the spectral width between the adjacent frequency points is to be extended is M. In such case, the operation that the window function is determined according to the length of the frequency-domain data and the set multiple by which the spectral width between the adjacent frequency points is to be extended includes that: a length of the window function is determined according to a ratio N/M of the length of the frequency-domain data to the set multiple by which the spectral width between the adjacent frequency points is to be extended. A type of the window function may be selected according to a specific condition, and may be, for example, a rectangular window and a Hamming window.

In the embodiment, a frequency-domain width between adjacent frequency-domain frequency points is extended to be M times of an original width, and the filter coefficient is a corresponding frequency-domain filter coefficient after a window function of a length N/M is added to the time-domain data corresponding to the frequency-domain data, namely an effect achieved by frequency-domain filtering is equivalent to adding the window function to middle data of the length N/M in the time-domain data, so that the spectral range corresponding to the frequency points is enlarged to be M times of an original range to improve the capability of resisting the sampling frequency offset and avoid error increase or complete incorrectness of the target function caused by a frequency point offset during conjugate multiplication of the data due to the existence of the sampling frequency point in subsequent CD estimation. The spectral width between the two frequency points is extended, so that the problem of the frequency point offset can be solved.

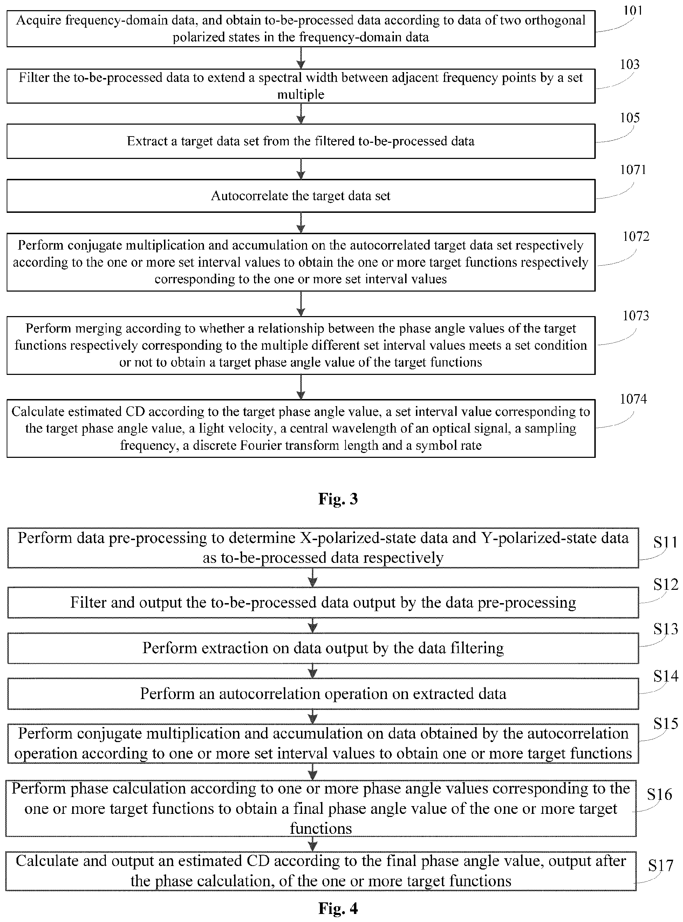

In some embodiments, referring to Fig. 3, the operation in operation 107 that the one or more target functions respectively corresponding to the one or more set interval values are calculated according to the target data set includes the following operations.

In operation 1071, the target data set is autocorrelated.

In operation 1072, conjugate multiplication and accumulation are performed on the autocorrelated target data set respectively according to the one or more set interval values to obtain the one or more target functions respectively corresponding to the one or more set interval values.

Autocorrelation refers to a dependence relationship between an instantaneous value of a signal at a moment and an instantaneous value at another moment. A magnitude of the set interval value may be determined according to a practical application condition. Under a normal condition, if the set interval value is less, a range of the estimated value is larger and correspondingly lower in accuracy; and conversely, if the set interval value is greater, the range of the estimated value is smaller and correspondingly higher in accuracy. There may be multiple set interval values, and thus multiple target functions corresponding to the set interval values respectively are obtained. Optionally, taking representation of the set interval value by $\Delta_1$ and the X-polarized-state data in the to-be-processed data obtained by pre-processing the frequency-domain data in operation 101 as an example, a formula (6) for performing conjugate multiplication and accumulation on the autocorrelated target data set respectively according to the one or more set interval values to obtain the one or more target functions respectively corresponding to the one or more set interval values is as follows:

$$F_1 = \sum_{n=1}^{\frac{L}{2}-\Delta_1-1} Rx[n] \cdot conj(Rx[n+\Delta_1])$$ (formula 6),

where Rx[n] represents autocorrelated data, and $L = 0, 1, 2 \ldots \frac{N}{M} - 1$ . When there are multiple sets of set interval values such as $\Delta_2, \Delta_3, \ldots$ , corresponding target functions $F_2, F_3, \ldots$ may be obtained. A calculation formula is the same as the formula (6) and will not be elaborated herein.

In the embodiment, conjugate multiplication and accumulation are performed on an autocorrelated output respectively according to the one or more set interval values to obtain the one or more target functions respectively corresponding to the one or more set interval values, so that the magnitude and number of the set interval value may be determined according to the practical application condition to regulate the accuracy of the range of the estimated value.

In some embodiments, the operation in operation 1071 that the target data set is autocorrelated includes that: conjugate multiplication is performed on data, separated by an interval of a baud rate in a frequency domain, in the target data set.

The target data set refers to data extracted from the to-be-processed data. Autocorrelating the target data set refers to performing conjugate multiplication on the data separated by an interval of a baud rate in a frequency domain. Still taking the condition that the to-be-processed data obtained by pre-processing the frequency-domain data in operation 101 is the X-polarized-state data X[K] and the Y-polarized-state data Y[K] respectively as an example, target data sets obtained by performing filtering and extraction on the to-be-processed data X[K] and Y[K] are represented by DX[L] and DY[L] respectively. Taking the X-polarized-state data X'[K] as an example, autocorrelation of the target data set DX[L] can be implemented through the following formula (7):

$$Rx[n] = DX[n] \cdot conj(DX[n+\frac{L}{2}])$$ (formula 7),

where $L = 0, 1, 2 \ldots \frac{N}{M} - 1$ , and conj(·) represents data conjugation.

In some embodiments, in operation 107, there are multiple different set interval values, and the operation that the estimated CD is calculated according to the phase angle values corresponding to the target functions includes the following operations.

In operation 1073, merging is performed according to whether a relationship between the phase angle values of the target functions respectively corresponding to the multiple different set interval values meets a set condition or not to obtain a target phase angle value of the target functions.

In operation 1074, the estimated CD is calculated according to the target phase angle value, a set interval value corresponding to the target phase angle value, a light velocity, a central wavelength of an optical signal, a sampling frequency, a discrete Fourier transform length and a symbol rate.

There are multiple different set interval values. If the set interval value is smaller, the range of the estimated value is larger and correspondingly lower in accuracy; and conversely, if the set interval value is larger, the range of the estimated value is smaller and correspondingly higher in accuracy. The target functions corresponding to the multiple set interval values respectively are obtained through the multiple different set interval values, phase calculation is performed according to the phase angle values corresponding to the target functions respectively, and the target phase angle value output after the phase calculation is multiplied by a corresponding coefficient to obtain the estimated CD. The corresponding coefficient is determined by the set interval value corresponding to the target phase angle value, the light velocity, the central wavelength of the optical signal, the sampling frequency, the discrete Fourier transform length and the symbol rate. A calculation formula for calculating the estimated CD according to the target phase angle value, the set interval value corresponding to the target phase angle value, the light velocity, the central wavelength of the optical signal, the sampling frequency, the discrete Fourier transform length and the symbol rate is shown as the following formula 8:

$$CD = \frac{\varphi_w'}{\Delta_w} \cdot \frac{c}{\lambda^2 \cdot \frac{f_s}{nfft} \cdot f_d} \quad \text{(formula 8),}$$

where c is the light velocity, the unit being meters/second (m/s); $\lambda$ represents the central wavelength of the optical signal corresponding to the frequency-domain data, the unit being nanometer (nm); nfft is the discrete Fourier transform length; $f_s$ represents the sampling frequency, the unit being GHz; and $f_d$ represents the symbol rate, the unit being Gbaud. The unit of the finally output estimated CD is nanoseconds/nanometer (ns/nm).

In some embodiments, the operation in operation 1073 that merging is performed according to whether the relationship between the phase angle values of the target functions respectively corresponding to the multiple different set interval values meets the set condition or not to obtain the target phase angle value of the target functions includes that:

phase angle values of target functions corresponding to two adjacent set interval values are determined as initial values of a first phase angle value and a second phase angle value;

a corresponding integral part and a corresponding decimal part are obtained according to a product of the first phase angle value and a ratio of the two set interval values;

in a case where a difference value between the second phase angle value and the decimal part is more than or equal to a first preset value, the second phase angle value is merged with the integral part, and then 1 is subtracted from the merging result to obtain an updated second phase angle value;

in a case where the difference value between the second phase angle value and the decimal part is less than a second preset value, the second phase angle value is merged with the integral part, and then 1 is added to the merging result to obtain the updated second phase angle value;

in a case where the difference value between the second phase angle value and the decimal part is less than the first preset value and more than or equal to the second preset value, the second phase angle value is merged with the integral part to obtain the updated second phase angle value; and

the updated second phase angle value and the phase angle value of the target function corresponding to the next set interval value are determined as the initial values of the first phase angle value and the second phase angle value, the operations are re-executed till the merging of the phase angle values of the target functions corresponding to the set interval values is completed, so as to obtain the target phase angle value of the target functions.

Herein, there is made such a hypothesis that the number of the set interval values is w (w>1) and $\Delta_1 < \Delta_2 < \ldots$

$$\varphi_1 = \frac{angle(F_1)}{2\pi}$$

$< \Delta_w$ . A phase angle value of a target function F1 corresponding to the set interval value $\Delta_1$ is                                 ,

$$\varphi_2 = \frac{angle(F_2)}{2\pi}$$

a phase angle value of a target function F2 corresponding to the set interval value $\Delta_2$ is                          , and by parity of reasoning, a phase angle value of a target function F3 corresponding to the set interval value $\Delta_w$ is

$$\varphi_w = \frac{angle(F_w)}{2\pi} \quad .$$

For example, the first preset value is 0.5 and the second preset value is -0.5. In such case, the operation that merging is performed on $\varphi_1, \varphi_2, \ldots \varphi_w$ according to whether the relationship between the phase angle values of the target functions respectively corresponding to the multiple different set interval values meets the set condition or not is implemented through the following formulae (9) to (11):

$$\varphi_1' = \varphi_1 \quad \text{(formula 9)};$$

$$itr = floor(\frac{\Delta_n}{\Delta_{n-1}} \varphi_{n-1}')$$

$$u = \frac{\Delta_n}{\Delta_{n-1}} \varphi_{n-1}' - itr \quad \text{(formula 10)};$$

and

if $\varphi_n - u \geq 0.5$, $u = \varphi_n - 1$
if $\varphi_n - u < -0.5$, $u = \varphi_n + 1$

in other cases, $u = \varphi_n$

$$\varphi_n' = itr + u \quad \text{(formula 11)},$$

where $angle(\cdot)$ represents calculation of a phase angle of the data, and $floor(\cdot)$ represents rounding-down. Therefore, in the formula (10), itr represents the integral part obtained according to the product of the ratio of the two set interval values and the first phase angle value, u represents the decimal part, and n = 2, 3, ... w.

When n is valued to be 2, $\varphi_n$ and $\varphi_{n-1}$ are $\varphi_2$ and $\varphi_1$ respectively. That is, $\varphi_2$ and $\varphi_1$ are merged as initial values of a first phase angle value and a second phase angle value according to the formulae (9) to (11) to obtain updated $\varphi_2'$, then updated $\varphi_2$ and sequentially selected $\varphi_3$ (namely when n is valued to be 3) are merged as initial values of a first phase angle value and a second phase angle value according to the formulae (9) to (11) to obtain updated $\varphi_3'$, and when the phase angle values of the target functions corresponding to the set interval values are merged in the same manner, a target phase angle value $\varphi_w'$ of the target function is obtained.

In some embodiments, before the operation in operation 1074 that the estimated CD is calculated according to the target phase angle value, the set interval value corresponding to the target phase angle value, the light velocity, the central wavelength of the optical signal, the sampling frequency, the discrete Fourier transform length and the symbol rate, the method includes that:

target phase angle values of the target functions obtained by latest multiple calculations are compared, and in a case where it is determined that an absolute value of a difference between any two target phase angle values is less than a threshold value, the presently obtained target phase angle value is determined as a final target phase angle value; and

in a case where it is determined that the absolute value of the difference between any two target phase angle values is greater than the threshold value, the previous target phase angle value is determined as the final target phase angle value.

Herein, the target phase angle values of the target functions obtained by the latest multiple calculations may refer to NL target phase angle values of the target functions obtained by the latest multiple calculations as of present time. The value of NL may be set according to a practical requirement. When an absolute value of a difference between any two of the NL target phase angle values is less than the threshold value, the presently obtained target phase angle value is selected as the final target phase angle value, so that the estimated CD is correspondingly calculated according to the presently obtained target phase angle value. When the absolute value of the difference between any two of the NL target phase angle values is greater than the threshold value, the previous target phase angle value is determined as the final target phase angle value, and the estimated CD is correspondingly calculated according to the previous target phase angle value.

In some embodiments, before the operation that the estimated CD is calculated according to the one or more phase angle values corresponding to the one or more target functions, the method includes that:
smoothing filtering is performed on the one or more target functions.

Herein, a filter coefficient for smoothing filtering of the target function is a low-pass filter coefficient. For example, if target functions are $F_1, F_2, F_3, ... F_W$, filtering outputs obtained by smoothing filtering are $F_1', F_2', F_3', ... F_W'$.

In some embodiments, before the operation that the estimated CD is calculated according to the one or more phase angle values corresponding to the one or more target functions, the method includes that:
multiple registers with set lengths are constructed, the phase angle values of the target functions obtained by latest multiple calculations are correspondingly stored in the registers, and the phase angle values corresponding to the target functions are obtained according to accumulated results of respective registers.

Herein, the set length of the register is the same as the number of calculations for the phase angle values of the target functions stored in the registers and obtained by the latest multiple calculations. The number of the registers corresponds to the number of the target functions. For example, the target functions are $F_1, F_2, F_3, ... F_W$, and the phase angle values of the target functions obtained by latest NL calculations are correspondingly stored in the registers. In such case, W registers with lengths being NL are constructed, represented by buffer1, buffer2, ..., buffer W, to store the target functions $F_1, F_2, F_3, ... F_W$ obtained by the latest NL calculations respectively. Initial values in buffer 1-W are all NL 0s, and the target functions corresponding to accumulated results in buffer1-W are $F_{1\_sum}, F_{2\_sum}, F_{3\_sum}, ... F_{W\_sum}$. Then, the target phase angle values of the target functions are calculated according to the target functions $F_{1\_sum}, F_{2\_sum}, F_{3\_sum}, ... F_{W\_sum}$ obtained according to the accumulated results in buffer1-W.

In another optional embodiment, when the target phase angle values of the target functions obtained by the latest multiple calculations are compared, the latest NL target phase angle values calculated according to the phase angle values of the target functions $F_{1\_sum}, F_{2\_sum}, F_{3\_sum}, ... F_{W\_sum}$ corresponding to the accumulated results in buffer1-W may be compared. When an absolute value of a difference between any two in the NL target phase angle values is less than the threshold value, the presently obtained target phase angle value $\varphi'_{W\_sum}$ is selected as the final target phase angle value. When the absolute value of the difference between any two in the NL target phase angle values is greater than the threshold value, the previous target phase angle value $\varphi'_{W\_sum}$ is determined as the final target phase angle value.

In some embodiments, after the operation that the estimated CD is calculated according to the one or more phase angle values corresponding to the one or more target functions, the method includes that:

the target phase angle values of the target functions obtained by the latest multiple calculations are compared, and in a case where it is determined that an absolute value of a difference between any two target phase angle values is less than a threshold value, the estimated CD is updated according to a presently obtained estimated CD; and

in a case where it is determined that the absolute value of the difference between any two target phase angle values is greater than the threshold value, a previously estimated CD is kept.

Herein, the target phase angle values of the target functions obtained by the latest multiple calculations may refer to NL target phase angle values of the target functions obtained by the latest multiple calculations as of the present time. The value of NL may be set according to a practical requirement. When an absolute value of a difference between any two in the NL target phase angle values is less than the threshold value, the estimated CD is started to be updated. Conversely, the estimated CD is stopped to be updated, and the previously estimated CD is kept.

In some embodiments, the operation in operation 105 that the target data set is extracted from the filtered to-be-processed data includes that:
the filtered to-be-processed data is divided into data sets of which the number is the same as the set multiple, and the target data set is extracted from the data sets.

Herein, data extraction is correlated with setting of the filter coefficient for data filtering. If a spectral width between two frequency points in the frequency domain is changed to be M times of an original width, the filtered to-be-processed data is divided into M sets, an interval between two data sets being M. The data sets obtained after the to-be-processed data is divided into the M sets may be represented as follows:
the data with indexes $L \cdot M$+1 forms a first set, the data with indexes $L \cdot M$+2 forms a second set, and by parity of reasoning,

$$L = 0,1,2 ... \frac{N}{M} - 1$$

the data with indexes $L \cdot M$+M forms an Mth set, where                    .

When the target data set is extracted from the data sets, a Pth set in the M sets may be selected as the target data set. P may be pre-configured and set to be any numerical value in 1 to M.

For further specifically understanding an implementation flow of the CD estimation method provided in the embodiment of the present disclosure, four optional embodiments of the CD estimation method will be described below respectively. Referring to Fig. 4, the CD estimation method includes the following operations.

In S11, data pre-processing is performed to determine X-polarized-state data and Y-polarized-state data as to-be-processed data respectively.

Frequency-domain data is acquired, the acquired frequency-domain data is separated by data pre-processing according to odd and even indexes, all the frequency-domain data with the even indexes is multiplied by -1, and the frequency-domain data with the odd indexes are kept unchanged. In high-speed/ultra-high-speed optical fiber communication, data is divided into two orthogonal polarized states, i.e., an X polarized state and a Y polarized state, and the two polarized states are independent of each other. The X-polarized-state data is taken as an example, and the same operation is performed on the Y-polarized-state data. Pre-processing the X-polarized-state data refers to performing processing in the following manner: $X'[K] = X[K] \cdot (-1)^k$, where K = 0, 1, 2 ... N - 1, N being a length of the frequency-domain data.

In S12, the to-be-processed data output by the data pre-processing is filtered and then output.

Finite Impulse Response (FIR) filtering is performed separately on the pre-processed X-polarized-state data X[K] and Y-polarized-state data Y[K]. A purpose of filtering is to extend a spectral range corresponding to frequency points to further improve a capability of resisting a sampling frequency offset. In CD estimation, a conjugate multiplication operation is subsequently required to be performed on data of different baud rates in a frequency domain in the frequency-domain data. The existence of the sampling frequency offset may cause a frequency point offset during conjugate multiplication and further cause error increase or complete incorrectness of a target function. A spectral width between two frequency points may be extended to solve the problem of the frequency point offset. A filter coefficient may be configured according to a specific condition of a system. In some exemplary implementations, a multiple by which the spectral width between the frequency points is to be extended may be obtained by pre-calculation or simulation, and the value may usually be twice or three times based on experiences. If the spectral width between the two frequency points in the frequency domain is extended to be M times of an original width, the filter coefficient is a corresponding frequency-domain filter coefficient after a window of a length N/M is added in a time domain, namely an effect achieved by frequency-domain filtering is equivalent to adding a window function to middle data of the length N/M in time-domain data. The window function may be selected to be, for example, a rectangular window and a Hamming window according to a specific condition. N is the length of the frequency-domain data, and M is an integer more than or equal to 2.

In S13, extraction is performed on data output by the data filtering.

Data extraction is performed on a data filtering output according to the set filter coefficient for data filtering. Data extraction is performed separately on the X-polarized-state data and the Y-polarized-state data.

If the spectral width between the two frequency points in the frequency domain is changed to be M times of the original width, the data output by the data filtering is divided into M sets, an interval between two data sets being M. In some exemplary implementations, the data with indexes $L \cdot M$+1 forms a first set, the data with indexes $L \cdot M$+2 forms

$$L = 0, \ 1, \ 2 ... \frac{N}{M} - 1$$

a second set, and by parity of reasoning, the data with indexes $L \cdot M$+M forms an Mth set.
. A Pth set in the M sets is selected as the output, and P may be any numerical value in 1 to M. It is to be noted that, once the Pth set is selected as the output, the Pth set is selected as the output in all subsequent data extraction operations. P, as a parameter, may be configured only when the system is started or restarted and is kept unchanged in other cases.

In S14, an autocorrelation operation is performed on extracted data.

Conjugate multiplication is performed on the data of the different baud rates in the frequency domain. There is made such a hypothesis that outputs after data extraction is performed on the X-polarized-state data and the Y-polarized-state data are DX[L] and DY[L] respectively, L = $0, \ 1, \ 2 ... \frac{N}{M} - 1$ Taking the X-polarized-state data as an example, an effect achieved for the Y-polarized-state data being the same, a calculation formula for the autocorrelation operation over the extracted data is as follows:

$$Rx[n] = DX[n] \cdot conj(DX[n + \frac{L}{2}])$$,

where $L = 0, \ 1, \ 2 \ldots \frac{N}{M} - 1$, and $conj(\cdot)$ represents data conjugation.

In S15, conjugate multiplication and accumulation are performed on data obtained by the autocorrelation operation according to one or more set interval values to obtain one or more target functions.

The target function is calculated according to a preset interval value $\Delta_1$:

$$F_1 = \sum_{n=1}^{\frac{L}{2} - \Delta_1 - 1} Rx[n] \cdot conj(Rx[n + \Delta_1])$$.

There may be multiple sets of set interval values such as $\Delta_2$, $\Delta_3$,..., so that corresponding target functions $F_2, F_3,...$ may be obtained.

In S 16, phase calculation is performed according to one or more phase angle values corresponding to the one or more target functions to obtain a final phase angle value of the one or more target functions.

Phase angle values corresponding to the target functions are calculated, and merging processing is performed on the phase angle values corresponding to different set interval values. There is made such a hypothesis that there are W (W>1) set interval values and $\Delta_1 < \Delta_2 < ... < \Delta_w$.

A phase angle value corresponding to $\Delta_1$ is $\varphi_1 = \dfrac{angle(F_1)}{2\pi}$, a phase angle value corresponding to $\Delta_2$ is $\varphi_2 = \dfrac{angle(F_2)}{2\pi}$, and by parity of reasoning, a phase angle value corresponding to $\Delta_w$ is $\varphi_w = \dfrac{angle(F_w)}{2\pi}$.

The following merging operation is performed on $\varphi_1, \varphi_2, ... \varphi_w$:

$$\varphi_1^{'} = \varphi_1$$

$$itr = floor(\frac{\Delta_n}{\Delta_{n-1}} \varphi_{n-1}^{'})$$

$$u = \frac{\Delta_n}{\Delta_{n-1}} \varphi_{n-1}^{'} - itr$$

if $\varphi_n - u \geq 0.5$ , $u = \varphi_n$ -1
if $\varphi_n - u < -0.5$ , $u = \varphi_n$ + 1

in other cases, $u = \varphi_n$

$$\varphi_n^{'} = itr + u$$,

where $\varphi'_w$ is the final phase angle value of the target function.

Herein, $n = 2,3,...,w$, wherein *angle*(·) represents calculation of a phase angle of data, and floor(·) represents rounding-down.

In S17, an estimated CD is calculated according to the final phase angle value, output after the phase calculation, of the one or more target functions and is output.

The phase angle output after the phase calculation is multiplied by a corresponding coefficient to obtain the estimated CD, and the estimated CD is output. A calculation formula of the estimated CD is as follows:

$$CD = \frac{\varphi'_w}{\Delta_w} \cdot \frac{c}{\lambda^2 \cdot \frac{f_s}{nfft} \cdot f_d},$$

where c is a light velocity, the unit being meters/second (m/s); $\lambda$ represents a central wavelength of an optical signal corresponding to the frequency-domain data, the unit being nanometer (nm); nfft is a discrete Fourier transform length; $f_s$ represents a sampling frequency, the unit being GHz; and $f_d$ represents a symbol rate, the unit being Gbaud. The unit of the finally output CD is nanoseconds/nanometer (ns/nm).

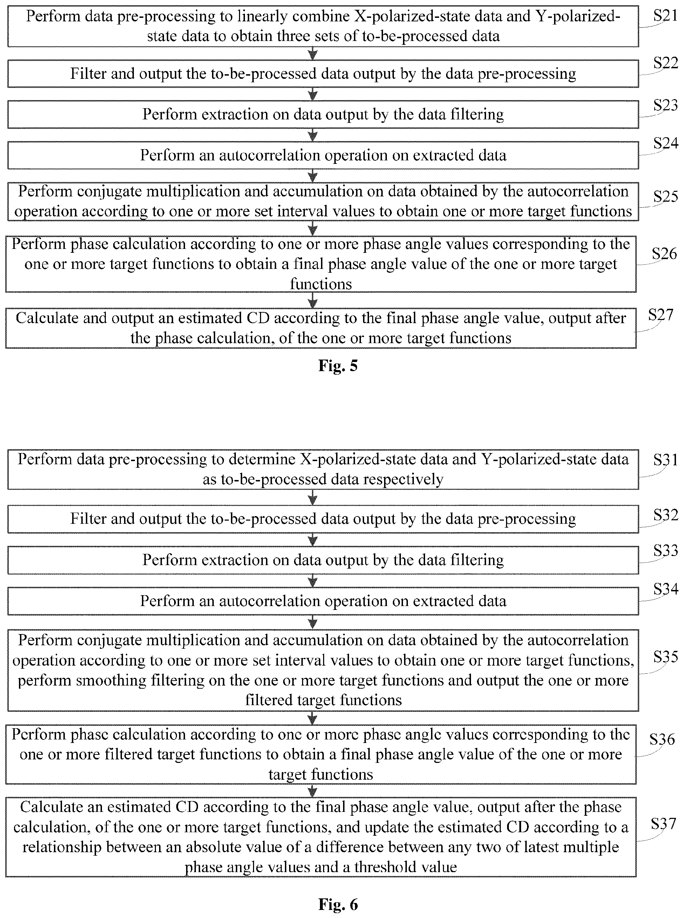

Referring to Fig. 5, in another embodiment, the CD estimation method includes the following operations.

In S21, data pre-processing is performed to linearly combine X-polarized-state data and Y-polarized-state data to obtain three sets of to-be-processed data.

Frequency-domain data is acquired, the acquired frequency-domain data is separated by data pre-processing according to odd and even indexes, all the frequency-domain data with the even indexes is multiplied by -1, and the frequency-domain data with the odd indexes are kept unchanged. In high-speed/ultra-high-speed optical fiber communication, data is divided into two orthogonal polarized states, i.e., an X polarized state and a Y polarized state, and the two polarized states are independent of each other. For example, for the X-polarized-state data, the pre-processed X-polarized-state data is obtained by multiplying the frequency-domain data with the even indexes in the X-polarized-state data by -1 and keeping the frequency-domain data with the odd indexes unchanged. Pre-processing may be represented by the following formula: X'[$K$] = $X$[$K$] $*$ (-1)$^K$, where K = 0 , 1, 2 ... N - 1, N being a length of the frequency-domain data. A processing manner for the Y-polarized-state data is the same as the pre-processing manner for the X-polarized-state data and will not be elaborated herein.

The following linear combination operation is performed on the pre-processed X-polarized-state data and the pre-processed Y-polarized-state data:

$$X_1[k] = X'[k]$$

$$X_2[k] = X'[k] + Y'[k]$$,

$$X_3[k] = X'[k] + j \cdot Y'[k]$$

where Y'[K] = Y[K]. (-1)$^k$, K = 0, 1, 2 ... N - 1 and N being the length of the frequency-domain data, and j is an imaginary unit. $X_1[k]$, $X_2[k]$, $X_3[k]$ obtained by the linear combination operation are determined as the three sets of to-be-processed data output by the data pre-processing.

In S22, the to-be-processed data output by the data pre-processing is filtered and then output. Unlike S12, the data input for filtering is replaced with $X_1[k],X_2[k],X_3[k]$, and correspondingly, an output result of data filtering also correspondingly changes to three sets of output results.

In S23, extraction is performed on data output by the data filtering. Unlike S13, the data input for extraction is replaced with the three sets of output results obtained in S22, and an extraction output result also changes to three sets of extraction output results.

In S24, an autocorrelation operation is performed on extracted data. Unlike S14, the data input for the autocorrelation operation is replaced with the three sets of extraction output results obtained in S23.

In S25, conjugate multiplication and accumulation are performed on data obtained by the autocorrelation operation according to set interval values to obtain target functions. Unlike S15, target functions are calculated according to respective sets of input to obtain three sets of target functions.

The three sets of target functions may be represented as $F_{1\_1}$, $F_{2\_1}$, $F_{3\_1}$, ...$F_{w\_1}$, $F_{1\_2}$, $F_{2\_2}$, $F_{3\_2}$, ...$F_{w\_2}$ and $F_{1\_3}$, $F_{2\_3}$, $F_{3\_3}$, ...$F_{w\_3}$. A calculation manner for conjugate multiplication of each set of input is the same as that in S15. A calculation formula for corresponding accumulation according to the three sets of target functions is as follows:

$$F_1^{'} = F_{1\_1} + F_{2\_1} + F_{3\_1}$$

$$F_2^{'} = F_{2\_1} + F_{2\_1} + F_{2\_1}$$.

$$F_3^{'} = F_{3\_1} + F_{3\_1} + F_{3\_1}$$

$F_1^{'}, F_2^{'}, F_3^{'}, ...F_w^{'}$ are output as target functions.

In S26, phase calculation is performed according to phase angle values corresponding to the target functions to obtain a final phase angle value of the target functions. Unlike S 16, an input for phase calculation is replaced with the target functions $F_1^{'}, F_2^{'}, F_3^{'}, ...F_w^{'}$ output by S25.

In S27, an estimated CD is calculated according to the final phase angle value, output after the phase calculation, of the one or more target functions and is output, like S17.

Referring to Fig. 6, in another embodiment, the CD estimation method includes the following operations.

In S31, data pre-processing is performed to determine X-polarized-state data and Y-polarized-state data as to-be-processed data respectively, like S11.

In S32, the to-be-processed data output by the data pre-processing is filtered and then output, like S 12.

In S33, extraction is performed on data output by the data filtering, like S13.

In S34, an autocorrelation operation is performed on extracted data, like S14.

In S35, conjugate multiplication and accumulation are performed on data obtained by the autocorrelation operation according to set interval values to obtain target functions, smoothing filtering is performed on the target functions, and the filtered target functions are output. Unlike S15, smoothing filtering is performed on target functions $F_2, F_3, ...F_w$ calculated according to multiple set interval values such as $\Delta_2, \Delta_3, ... \Delta_w$, a filter coefficient is a low-pass filter coefficient, and filtering outputs are $F_1^{'}, F_2^{'}, F_3^{'}, ...F_w^{'}$.

In S36, phase calculation is performed according to phase angle values corresponding to the filtered target functions to obtain a final phase angle value of the target functions. Unlike S 16, an input for phase calculation is replaced with the target functions $F_1^{'}, F_2^{'}, F_3^{'}, ...F_w^{'}$ output by S35.

In S37, an estimated CD is calculated according to the final phase angle value, output after the phase calculation, of the target functions, and the estimated CD is updated according to a relationship between an absolute value of a difference between any two of latest multiple phase angle values and a threshold value. Unlike S17, after the estimated CD is calculated according to the final phase angle value, output after the phase calculation, of the target functions, the latest multiple phase angle values $\varphi_w^{'}$ are compared, and if an absolute value of a difference between any two of the multiple phase angle values $\varphi_w^{'}$ is less than the threshold value Th, the estimated CD is started to be updated and a presently obtained estimated CD is output; and if the absolute value of any two of the multiple phase angle values $\varphi_w^{'}$

is more than or equal to the threshold value Th, the estimated CD is stopped to be updated, a previously estimated CD is kept and the previously estimated CD is output.

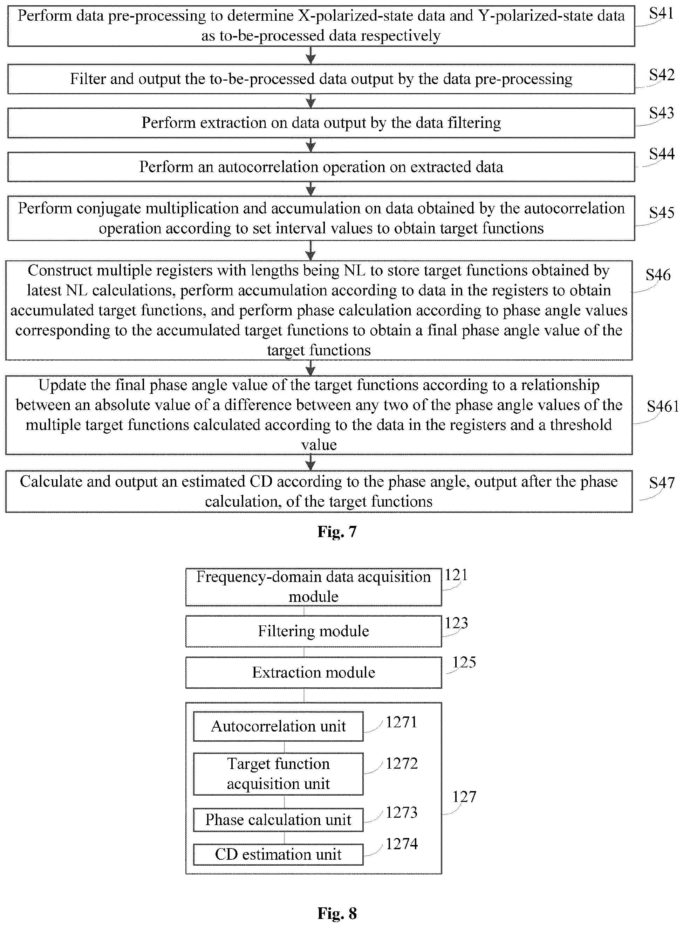

Referring to Fig. 7, in another embodiment, the CD estimation method includes the following operations.

In S41, data pre-processing is performed to determine X-polarized-state data and Y-polarized-state data as to-be-processed data respectively, like S11.

In S42, the to-be-processed data output by the data pre-processing is filtered and then output, like S 12.

In S43, extraction is performed on data output by the data filtering, like S13.

In S44, an autocorrelation operation is performed on extracted data, like S14.

In S45, conjugate multiplication and accumulation are performed on data obtained by the autocorrelation operation according to set interval values to obtain target functions, like S15.

In S46, multiple registers with lengths being NL are constructed to store target functions obtained by latest NL calculations, accumulation is performed according to data in the registers to obtain accumulated target functions, and phase calculation is performed according to phase angle values corresponding to the accumulated target functions to obtain a final phase angle value of the target functions. Unlike S16:

W buffer1, buffer2, ..., buffer W with the lengths NL are constructed to store the target functions $F_1, F_2, F_3, ... F_W$ obtained by the latest NL calculations. Initial values in buffer1-W are all NL 0s, and performing accumulation according to the data in the registers to obtain the accumulated target functions refers to summing data in buffer1-W to obtain $F_{1\_sum}, F_{2\_sum}, F_{3\_sum}, ... F_{w\_sum}$ respectively.

Performing phase calculation according to the phase angle values corresponding to the accumulated target functions refers to calculating the phase angle value $\varphi'_{w\_sum}$ of the target function according to the target functions $F_{1\_sum}, F_{2\_sum}, F_{3\_sum}, ... F_{w\_sum}$ obtained by summing the data in buffer1-W respectively, and a calculation process is the same as S16.

In S461, the final phase angle value of the target function is updated according to a relationship between an absolute value of a difference between any two of the phase angle values of the multiple target functions calculated according to the data in the registers and a threshold value. Unlike S16:

after phase calculation is performed on the phase angle values corresponding to the accumulated target functions to obtain the final phase angle value of the target function, the following operations are further included: when the absolute value of the difference between any two of the phase angle values $\varphi'_w$ of the multiple target functions calculated according to the data in buffer1-W is less than the threshold value Th, $\varphi'_{w\_sum}$ presently calculated in S46 is determined as a phase calculation output; and in other cases, previous $\varphi'_{w\_sum}$ is used as the phase calculation output. $\varphi'_{w\_sum}$ is the phase angle value, calculated using $F_{1\_sum}, F_{2\_sum}, F_{3\_sum}, ... F_{w\_sum}$, of the target function.

In S47, an estimated CD is calculated according to the phase angle, output after the phase calculation, of the target function and is output. Unlike S17, the target function output after the phase calculation is replaced with the phase angle value, output according to S461, of the target function. A calculation manner for the estimated CD is the same as that in S17.

In the related art, at a receiver, a broad pulse response of a CD accumulated in long-distance transmission may be dispersed in hundreds and even thousands of code elements and is positively proportional to a square of a signal sampling frequency. Considering the implementation efficiency, an FFT length during frequency-domain compensation may be great, so that a spectral density is relatively high, a system is sensitive to a sampling spectrum during frequency-domain processing, and furthermore, a conventional CD estimation method may not operate normally in an ultra-high-speed optical fiber communication system. According to the CD estimation method provided in the embodiment of the present disclosure, the receiver may implement data pre-processing and filtering in the frequency domain and extend a spectral width between frequency points, so that the problem that a CD estimation method for an ultra-high-speed long-distance optical fiber system is sensitive to a sampling frequency offset is solved, and accurate CD estimation for ultra-high-speed optical fiber communication is implemented. In addition, phase angle value corresponding to target functions are calculated, and merging processing is performed on phase angles corresponding to different intervals to obtain a final phase angle of the target functions to further calculate an estimated CD of the receiver system. Compared with a CD scanning operation or FFT operation-based CD estimation method provided in the related art, the method has the advantages that calculations of a CD estimation algorithm are reduced, accurate CD estimation of the ultra-high-speed long-distance optical fiber communication system is implemented by a relatively simple method, system resources are saved, and power consumption of the system is reduced.

Table 1 is a comparison table of system resources required by calculating the estimated CD once through the CD estimation method provided in the embodiment of the present disclosure and those required by the FFT operation-based CD estimation method in the related art. For example, when a data bit width is 10 bits, the resources required by calculations for calculating the estimated CD once according to the target function value through the CD estimation method provided in the embodiment of the present disclosure are reduced by about 78.6%, compared with those required by calculating the estimated CD once based on a conventional FFT method.

Table 1

| Calculations | The embodiment of the present disclosure | Conventional FFT method (the FFT length is 8,192) | Saved resources |
|---|---|---|---|
| Converted into complex number multiplicative number | 6,282 | 29,388 | 78.6% |

Referring to Fig. 8, another aspect of the embodiments of the present disclosure also provides a CD estimation device, which includes: a frequency-domain data acquisition module 121, configured to acquire frequency-domain data and obtain to-be-processed data according to data of two orthogonal polarized states in the frequency-domain data; a filtering module 123, configured to filter the to-be-processed data to extend a spectral width between adjacent frequency points by a set multiple; an extraction module 125, configured to extract a target data set from the filtered to-be-processed data; and a CD estimation module 127, configured to calculate one or more target functions respectively corresponding to one or more set interval values according to the target data set and calculate an estimated CD according to one or more phase angle values corresponding to the one or more target functions.

In some embodiments, the frequency-domain data acquisition module 121 includes a polarized-state data unit, a first pre-processing unit or a second pre-processing unit. The polarized-state data unit is configured to separate X-polarized-state data in the frequency-domain data according to odd and even indexes, separate Y-polarized-state data in the frequency-domain data according to odd and even indexes, and pre-process the X-polarized-state data and the Y-polarized-state data by negating the frequency-domain data with the even indexes and keeping the frequency-domain data with the odd indexes unchanged. The first pre-processing unit is configured to determine the pre-processed X-polarized-state data and the pre-processed Y-polarized-state data as the to-be-processed data respectively. The second pre-processing unit is configured to perform a linear combination operation on the pre-processed X-polarized-state data and the pre-processed Y-polarized-state data to obtain multiple sets of to-be-processed data.

In some embodiments, the second pre-processing unit is configured to determine the X-polarized-state data or the Y-polarized-state data as first to-be-processed data; negate the X-polarized-state data and the Y-polarized-state data and determine a sum of the negated X-polarized-state data and the negated Y-polarized-state data as second to-be-processed data; and negate the X-polarized-state data and the Y-polarized-state data and determine a complex number, which takes the negated X-polarized-state data as a real part and the negated Y-polarized-state data as an imaginary part, as third to-be-processed data.

In some embodiments, the filtering module 123 is configured to determine a window function according to a length of the frequency-domain data and the set multiple by which the spectral width between the adjacent frequency points is to be extended; and determine a frequency-domain filter coefficient according to a frequency-domain convolution corresponding to a result of exerting the window function to time-domain data corresponding to the frequency-domain data, and filter the to-be-processed data according to the frequency-domain filter coefficient.

In some embodiments, the CD estimation module 127 includes an autocorrelation unit 1271 and a target function acquisition unit 1272. The autocorrelation unit 1271 is configured to autocorrelate the target data set. The target function acquisition unit 1272 is configured to perform conjugate multiplication and accumulation on the autocorrelated target data set respectively according to the one or more set interval values to obtain the one or more target functions respectively corresponding to the one or more set interval values.

In some embodiments, the autocorrelation unit 1271 is configured to perform conjugate multiplication on data, separated by an interval of a baud rate in a frequency domain, in the target data set.

In some embodiments, there are multiple different set interval values. The CD estimation module 127 further includes a phase calculation unit 1273 and a CD estimation unit 1274. The phase calculation unit 1273 is configured to perform merging according to whether a relationship between the phase angle values of the target functions respectively corresponding to the multiple different set interval values meets a set condition or not to obtain a target phase angle value of the target functions. The CD estimation unit 1274 is configured to calculate the estimated CD according to the target phase angle value, a set interval value corresponding to the target phase angle value, a light velocity, a central wavelength of an optical signal, a sampling frequency, a discrete Fourier transform length and a symbol rate.

In some embodiments, the phase calculation unit 1273 is configured to determine phase angle values of target functions corresponding to two adjacent set interval values as initial values of a first phase angle value and a second phase angle value; obtain a corresponding integral part and a corresponding decimal part according to a product of the first phase angle value and a ratio of the two set interval values; in a case where a difference value between the second phase angle value and the decimal part is more than or equal to a first preset value, merge the second phase angle value and the integral part and then subtract 1 from the merging result to obtain an updated second phase angle value; in a case where the difference value between the second phase angle value and the decimal part is less than a second preset value, merge the second phase angle value and the integral part and then add 1 to the merging result to obtain the updated second phase angle value; in a case where the difference value between the second phase angle value and the decimal part is less than the first preset value and more than or equal to the second preset value, merge the second phase angle value and the integral part to obtain the updated second phase angle value; and determine the updated second phase angle value and the phase angle value of the target function corresponding to the next set interval value as the initial values of the first phase angle value and the second phase angle value, re-execute the operations till the merging of the phase angle values of the target functions corresponding to the set interval values is completed, so as to obtain the target phase angle value of the target functions.

In some embodiments, the phase calculation unit 1273 is configured to compare target phase angle values of the target functions obtained by latest multiple calculations, and in a case where it is determined that an absolute value of a difference between any two target phase angle values is less than a threshold value, determine the presently obtained target phase angle value as a final target phase angle value; and in a case where it is determined that the absolute value of the difference between any two target phase angle values is greater than the threshold value, determine a previously obtained target phase angle value as the final target phase angle value.

In some embodiments, the target function acquisition unit 1272 is further configured to, before the estimated CD is calculated according to the one or more phase angle values corresponding to the one or more target functions, perform smoothing filtering on the one or more target functions.

In some embodiments, the phase calculation unit 1273 is further configured to, before the estimated CD is calculated according to the one or more phase angle values corresponding to the one or more target functions, construct multiple registers with set lengths, correspondingly store the phase angle values of the target functions obtained by latest multiple calculations in the registers and obtain the phase angle values corresponding to the target functions according to accumulated results of respective registers.

In some embodiments, the CD estimation unit 1274 is further configured to, after the estimated CD is calculated according to the one or more phase angle values corresponding to the one or more target functions, compare the target phase angle values of the target functions obtained by the latest multiple calculations, and in a case where it is determined that an absolute value of a difference between any two target phase angle values is less than a threshold value, update the estimated CD according to a presently obtained estimated CD; and in a case where it is determined that the absolute value of the difference between any two target phase angle values is greater than the threshold value, keep a previously estimated CD.

In some embodiments, the extraction module 125 is configured to divide the filtered to-be-processed data into data sets of which the number is the same as the set multiple and extract the target data set from the data sets.

The CD estimation device provided in the embodiment is described with division of each abovementioned program module as an example when the estimated CD is calculated and the operations may be allocated to different program modules for completion as required during a practical application, namely an internal structure of the device is divided into different program modules to complete all or part of above-described processing. In addition, the CD estimation device provided in the embodiment belongs to the same concept of the CD estimation method embodiment, details about a specific implementation process thereof refer to the method embodiment, and elaborations are omitted herein.

An embodiment of the present disclosure also provides a computer storage medium, for example, including a memory storing a computer program. The computer program may be executed by a processor to complete the operations of the CD estimation method provided in any embodiment of the present disclosure. The computer storage medium may be a memory such as a Ferroelectric Random Access Memory (FRAM), a Read-Only Memory (ROM), a Programmable ROM (PROM), an Erasable PROM (EPROM), an Electrically EPROM (EEPROM), a flash memory, a magnetic surface memory, an optical disk or a Compact Disc Read-Only Memory (CD-ROM), etc., and may also be various devices including one or any combination of the memories.

The above is only the specific implementation mode of the present disclosure and not intended to limit the scope of protection of the present disclosure. Any variations or replacements apparent to those skilled in the art within the technical scope disclosed by the present disclosure shall fall within the scope of protection of the present disclosure. The scope of protection of the present disclosure shall be subject to the scope of protection of the claims.

## Industrial Applicability

Through the CD estimation method and device, coherent receiver for optical communication data and storage medium provided in the embodiments, frequency-domain data is acquired, to-be-processed data is obtained according to data of two orthogonal polarized states in the frequency-domain data, the to-be-processed data is filtered to extend a spectral width between adjacent frequency points by a set multiple, a target data set is extracted from the filtered to-be-processed data, one or more target functions respectively corresponding to one or more set interval values are calculated according to the target data set, and an estimated CD is calculated according to the one or more phase angle values corresponding to the one or more target functions. In such a manner, the data is processed and filtered in a frequency domain, and the spectral width between the frequency points is extended, so that the problem of sensitivity of a system to a sampling spectrum during frequency-domain processing can be solved, and accurate CD estimation can be implemented. The estimated CD is calculated according to the one or more phase angle values corresponding to the one or more target functions, so that calculations of a CD estimation algorithm are reduced, accurate CD estimation is implemented by a relatively simple method, system resources are saved, and power consumption of the system is reduced.

**Claims**

1. A Chromatic Dispersion, CD, estimation method, comprising:

   acquiring frequency-domain data and obtaining to-be-processed data according to data of two orthogonal polarized states in the frequency-domain data;
   filtering the to-be-processed data to extend a spectral width between adjacent frequency points by a set multiple;
   extracting a target data set from the filtered to-be-processed data; and
   calculating one or more target functions respectively corresponding to one or more set interval values according to the target data set and calculating an estimated CD according to one or more phase angle values corresponding to the one or more target functions.

2. The CD estimation method according to claim 1, wherein obtaining the to-be-processed data according to the data of the two orthogonal polarized states in the frequency-domain data comprises:

   separating X-polarized-state data in the frequency-domain data according to odd and even indexes, separating Y-polarized-state data in the frequency-domain data according to odd and even indexes, and obtaining pre-processing the X-polarized-state data and the Y-polarized-state data by negating the frequency-domain data with the even indexes and keeping the frequency-domain data with the odd indexes unchanged; and
   determining the pre-processed X-polarized-state data and the pre-processed Y-polarized-state data as the to-be-processed data respectively, or, performing a linear combination operation on the pre-processed X-polarized-state data and the pre-processed Y-polarized-state data to obtain multiple sets of to-be-processed data.

3. The CD estimation method according to claim 2, wherein performing the linear combination operation on the pre-processed X-polarized-state data and the pre-processed Y-polarized-state data to obtain the multiple sets of to-be-processed data comprises:

   determining the X-polarized-state data or the Y-polarized-state data as first to-be-processed data;
   negating the X-polarized-state data and the Y-polarized-state data and determining a sum of the negated X-polarized-state data and the negated Y-polarized-state data as second to-be-processed data; and
   negating the X-polarized-state data and the Y-polarized-state data and determining a complex number, which takes the negated X-polarized-state data as a real part and the negated Y-polarized-state data as an imaginary part, as third to-be-processed data.

4. The CD estimation method according to claim 1, wherein filtering the to-be-processed data to extend the spectral width between the adjacent frequency points by the set multiple comprises:

   determining a window function according to a length of the frequency-domain data and the set multiple by which the spectral width between the adjacent frequency points is to be extended; and
   determining a frequency-domain filter coefficient according to a frequency-domain convolution corresponding to a result of exerting the window function to time-domain data corresponding to the frequency-domain data, and filtering the to-be-processed data according to the frequency-domain filter coefficient.

5. The CD estimation method according to claim 1, wherein calculating the one or more target functions respectively

EP 3 890 211 A1

corresponding to the one or more set interval values according to the target data set comprises:

autocorrelating the target data set; and
performing conjugate multiplication and accumulation on the autocorrelated target data set respectively according to the one or more set interval values to obtain the one or more target functions respectively corresponding to the one or more set interval values.

6. The CD estimation method according to claim 5, wherein autocorrelating the target data set comprises:
performing conjugate multiplication on data, separated by an interval of a baud rate in a frequency domain, in the target data set.

7. The CD estimation method according to claim 1, wherein there are multiple different set interval values, and calculating the estimated CD according to the phase angle values corresponding to the target functions comprises:

performing merging according to whether a relationship between the phase angle values of the target functions respectively corresponding to the multiple different set interval values meets a set condition or not to obtain a target phase angle value of the target functions; and
calculating the estimated CD according to the target phase angle value, a set interval value corresponding to the target phase angle value, a light velocity, a central wavelength of an optical signal, a sampling frequency, a discrete Fourier transform length and a symbol rate.

8. The CD estimation method according to claim 7, wherein performing merging according to whether the relationship between the phase angle values of the target functions respectively corresponding to the multiple different set interval values meets the set condition or not to obtain the target phase angle value of the target functions comprises:

determining phase angle values of target functions corresponding to two adjacent set interval values as initial values of a first phase angle value and a second phase angle value;
obtaining a corresponding integral part and a corresponding decimal part according to a product of the first phase angle value and a ratio of the two set interval values;
in a case where a difference value between the second phase angle value and the decimal part is more than or equal to a first preset value, merging the second phase angle value and the integral part and then subtracting 1 from the merging result to obtain an updated second phase angle value;
in a case where the difference value between the second phase angle value and the decimal part is less than a second preset value, merging the second phase angle value and the integral part and then adding 1 to the merging result to obtain the updated second phase angle value;
in a case where the difference value between the second phase angle value and the decimal part is less than the first preset value and more than or equal to the second preset value, merging the second phase angle value and the integral part to obtain the updated second phase angle value; and
determining the updated second phase angle value and the phase angle value of the target function corresponding to the next set interval value as the initial values of the first phase angle value and the second phase angle value, re-executing the operations till the merging of the phase angle values of the target functions corresponding to the set interval values is completed, so as to obtain the target phase angle value of the target functions.

9. The CD estimation method according to claim 7, before calculating the estimated CD according to the target phase angle value, the set interval value corresponding to the target phase angle value, the light velocity, the central wavelength of the optical signal, the sampling frequency, the discrete Fourier transform length and the symbol rate, comprising:

comparing target phase angle values of the target functions obtained by latest multiple calculations, and in a case where it is determined that an absolute value of a difference between any two target phase angle values is less than a threshold value, determining the presently obtained target phase angle value as a final target phase angle value; and
in a case where it is determined that the absolute value of the difference between any two target phase angle values is greater than the threshold value, determining a previously obtained target phase angle value as the final target phase angle value.

10. The CD estimation method according to claim 1, before calculating the estimated CD according to the one or more phase angle values corresponding to the one or more target functions, comprising:
performing smoothing filtering on the one or more target functions.

**11.** The CD estimation method according to claim 1, before calculating the estimated CD according to the one or more phase angle values corresponding to the one or more target functions, comprising:
constructing multiple registers with set lengths, correspondingly storing the phase angle values of the target functions obtained by latest multiple calculations in the registers and obtaining the phase angle values corresponding to the target functions according to accumulated results of respective registers.

**12.** The CD estimation method according to claim 1, after calculating the estimated CD according to the one or more phase angle values corresponding to the one or more target functions, comprising:

comparing the target phase angle values of the target functions obtained by the latest multiple calculations, and in a case where it is determined that an absolute value of a difference between any two target phase angle values is less than a threshold value, updating the estimated CD according to a presently obtained estimated CD; and
in a case where it is determined that the absolute value of the difference between any two target phase angle values is greater than the threshold value, keeping a previously estimated CD.

**13.** The CD estimation method according to claim 1, wherein extracting the target data set from the filtered to-be-processed data comprises:
dividing the filtered to-be-processed data into data sets of which the number is the same as the set multiple and extracting the target data set from the data sets.

**14.** A Chromatic Dispersion, CD, estimation device, comprising:

a frequency-domain data acquisition module, configured to acquire frequency-domain data and obtain to-be-processed data according to data of two orthogonal polarized states in the frequency-domain data;
a filtering module, configured to filter the to-be-processed data to extend a spectral width between adjacent frequency points by a set multiple;
an extraction module, configured to extract a target data set from the filtered to-be-processed data; and
a CD estimation module, configured to calculate one or more target functions respectively corresponding to one or more set interval values according to the target data set and calculate an estimated CD according to one or more phase angle values corresponding to the one or more target functions.

**15.** A coherent receiver for optical communication data, comprising an IQ imbalance compensation module, a Chromatic Dispersion, CD, estimation and compensation module, a polarization demultiplexing module, a carrier recovery module and a decision decoding module that are connected in sequence, wherein the CD estimation and compensation module is configured to implement the CD estimation method according to any one of claims 1-13.

**16.** A storage medium, in which an executable instruction is stored, the executable instruction being executed by a processor to implement the Chromatic Dispersion, CD, estimation method according to any one of claims 1-13.

IQ imbalance compensation module — 11

CD estimation and compensation module — 12

Polarization demultiplexing module — 13

Carrier recovery module — 14

Decision decoding module — 15

From the
ADC

**Fig. 1**

| | 101 |
| Acquire frequency-domain data, and obtain to-be-processed data according to data of two orthogonal polarized states in the frequency-domain data | |

| | 103 |
| Filter the to-be-processed data to extend a spectral width between adjacent frequency points by a set multiple | |

| | 105 |
| Extract a target data set from the filtered to-be-processed data | |

| | 107 |
| Calculate one or more target functions respectively corresponding to one or more set interval values according to the target data set, and calculate an estimated CD according to one or more phase angle values corresponding to the one or more target functions | |

**Fig. 2**

Acquire frequency-domain data, and obtain to-be-processed data according to data of two orthogonal polarized states in the frequency-domain data | 101

Filter the to-be-processed data to extend a spectral width between adjacent frequency points by a set multiple | 103

Extract a target data set from the filtered to-be-processed data | 105

Autocorrelate the target data set | 1071

Perform conjugate multiplication and accumulation on the autocorrelated target data set respectively according to the one or more set interval values to obtain the one or more target functions respectively corresponding to the one or more set interval values | 1072

Perform merging according to whether a relationship between the phase angle values of the target functions respectively corresponding to the multiple different set interval values meets a set condition or not to obtain a target phase angle value of the target functions | 1073

Calculate estimated CD according to the target phase angle value, a set interval value corresponding to the target phase angle value, a light velocity, a central wavelength of an optical signal, a sampling frequency, a discrete Fourier transform length and a symbol rate | 1074

**Fig. 3**

Perform data pre-processing to determine X-polarized-state data and Y-polarized-state data as to-be-processed data respectively | S11

Filter and output the to-be-processed data output by the data pre-processing | S12

Perform extraction on data output by the data filtering | S13

Perform an autocorrelation operation on extracted data | S14

Perform conjugate multiplication and accumulation on data obtained by the autocorrelation operation according to one or more set interval values to obtain one or more target functions | S15

Perform phase calculation according to one or more phase angle values corresponding to the one or more target functions to obtain a final phase angle value of the one or more target functions | S16

Calculate and output an estimated CD according to the final phase angle value, output after the phase calculation, of the one or more target functions | S17

**Fig. 4**

| | |
|---|---|
| Perform data pre-processing to linearly combine X-polarized-state data and Y-polarized-state data to obtain three sets of to-be-processed data | S21 |
| Filter and output the to-be-processed data output by the data pre-processing | S22 |
| Perform extraction on data output by the data filtering | S23 |
| Perform an autocorrelation operation on extracted data | S24 |
| Perform conjugate multiplication and accumulation on data obtained by the autocorrelation operation according to one or more set interval values to obtain one or more target functions | S25 |
| Perform phase calculation according to one or more phase angle values corresponding to the one or more target functions to obtain a final phase angle value of the one or more target functions | S26 |
| Calculate and output an estimated CD according to the final phase angle value, output after the phase calculation, of the one or more target functions | S27 |

**Fig. 5**

| | |
|---|---|
| Perform data pre-processing to determine X-polarized-state data and Y-polarized-state data as to-be-processed data respectively | S31 |
| Filter and output the to-be-processed data output by the data pre-processing | S32 |
| Perform extraction on data output by the data filtering | S33 |
| Perform an autocorrelation operation on extracted data | S34 |
| Perform conjugate multiplication and accumulation on data obtained by the autocorrelation operation according to one or more set interval values to obtain one or more target functions, perform smoothing filtering on the one or more target functions and output the one or more filtered target functions | S35 |
| Perform phase calculation according to one or more phase angle values corresponding to the one or more filtered target functions to obtain a final phase angle value of the one or more target functions | S36 |
| Calculate an estimated CD according to the final phase angle value, output after the phase calculation, of the one or more target functions, and update the estimated CD according to a relationship between an absolute value of a difference between any two of latest multiple phase angle values and a threshold value | S37 |

**Fig. 6**

| | |
|---|---|
| Perform data pre-processing to determine X-polarized-state data and Y-polarized-state data as to-be-processed data respectively | S41 |
| Filter and output the to-be-processed data output by the data pre-processing | S42 |
| Perform extraction on data output by the data filtering | S43 |
| Perform an autocorrelation operation on extracted data | S44 |
| Perform conjugate multiplication and accumulation on data obtained by the autocorrelation operation according to set interval values to obtain target functions | S45 |
| Construct multiple registers with lengths being NL to store target functions obtained by latest NL calculations, perform accumulation according to data in the registers to obtain accumulated target functions, and perform phase calculation according to phase angle values corresponding to the accumulated target functions to obtain a final phase angle value of the target functions | S46 |
| Update the final phase angle value of the target functions according to a relationship between an absolute value of a difference between any two of the phase angle values of the multiple target functions calculated according to the data in the registers and a threshold value | S461 |
| Calculate and output an estimated CD according to the phase angle, output after the phase calculation, of the target functions | S47 |

**Fig. 7**

| | |
|---|---|
| Frequency-domain data acquisition module | 121 |
| Filtering module | 123 |
| Extraction module | 125 |

| | | |
|---|---|---|
| Autocorrelation unit | 1271 | |
| Target function acquisition unit | 1272 | |
| | | 127 |
| Phase calculation unit | 1273 | |
| CD estimation unit | 1274 | |

**Fig. 8**

## INTERNATIONAL SEARCH REPORT

| | International application No. |
|---|---|
| | **PCT/CN2019/122107** |

**A.    CLASSIFICATION OF SUBJECT MATTER**

    H04B 10/61(2013.01)i

According to International Patent Classification (IPC) or to both national classification and IPC

**B.    FIELDS SEARCHED**

Minimum documentation searched (classification system followed by classification symbols)

    H04B，H04L

Documentation searched other than minimum documentation to the extent that such documents are included in the fields searched

Electronic data base consulted during the international search (name of data base and, where practicable, search terms used)

    CNKI, CNABS, CNTXT, VEN, USTXT, WOTXT, EPTXT: 色散, 估计, 测量, 探测, 补偿, 偏振, 滤波, 频谱, 宽度, 展宽, 扩
    展, 增加, 扩宽, 间隔, 相角, 幅角, 敏感, 快速, 速度; dispersion, estimate, measure, detect, compensate, polarize, filter, spectral,
    spectrum, width, broad, widen, expand, increase, gap, phase, argument, sensitive, fast, rapid, speed

**C.    DOCUMENTS CONSIDERED TO BE RELEVANT**

| Category* | Citation of document, with indication, where appropriate, of the relevant passages | Relevant to claim No. |
|---|---|---|
| A | CN 105375978 A (ZTE MICROELECTRONICS TECHNOLOGY CO., LTD.) 02 March 2016 (2016-03-02)<br>      entire document | 1-16 |
| A | CN 104579476 A (ZTE CORPORATION) 29 April 2015 (2015-04-29)<br>      entire document | 1-16 |
| A | CN 104780131 A (ZTE MICROELECTRONICS TECHNOLOGY CO., LTD.) 15 July 2015 (2015-07-15)<br>      entire document | 1-16 |
| A | EP 1318622 A2 (NORTEL NETWORKS LTD.) 11 June 2003 (2003-06-11)<br>      entire document | 1-16 |
| A | US 6204924 B1 (EXFO ELECTRO-OPTICAL ENGINEERING INC.) 20 March 2001 (2001-03-20)<br>      entire document | 1-16 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **26 February 2020** | **04 March 2020** |

| Name and mailing address of the ISA/CN | Authorized officer |
|---|---|
| **China National Intellectual Property Administration**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/122107**

| Patent document cited in search report | | | Publication date (day/month/year) | Patent family member(s) | | | Publication date (day/month/year) |
|---|---|---|---|---|---|---|---|
| CN | 105375978 | A | 02 March 2016 | EP | 3190722 | A1 | 12 July 2017 |
| | | | | EP | 3190722 | A4 | 09 August 2017 |
| | | | | CN | 105375978 | B | 05 February 2019 |
| | | | | WO | 2016029696 | A1 | 03 March 2016 |
| | | | | US | 2018159635 | A1 | 07 June 2018 |
| | | | | US | 10153847 | B2 | 11 December 2018 |
| CN | 104579476 | A | 29 April 2015 | EP | 3048746 | A4 | 19 October 2016 |
| | | | | US | 9729232 | B2 | 08 August 2017 |
| | | | | WO | 2014183699 | A1 | 20 November 2014 |
| | | | | EP | 3048746 | A1 | 27 July 2016 |
| | | | | CN | 104579476 | B | 28 September 2018 |
| | | | | US | 2016269108 | A1 | 15 September 2016 |
| | | | | EP | 3048746 | B1 | 21 November 2018 |
| CN | 104780131 | A | 15 July 2015 | CN | 104780131 | B | 30 April 2019 |
| | | | | WO | 2015106494 | A1 | 23 July 2015 |
| | | | | EP | 3096469 | A1 | 23 November 2016 |
| | | | | JP | 2017503443 | A | 26 January 2017 |
| | | | | KR | 20160103979 | A | 02 September 2016 |
| | | | | JP | 6310091 | B2 | 11 April 2018 |
| | | | | US | 2016329960 | A1 | 10 November 2016 |
| | | | | EP | 3096469 | B1 | 14 August 2019 |
| | | | | US | 9929801 | B2 | 27 March 2018 |
| | | | | EP | 3096469 | A4 | 30 August 2017 |
| EP | 1318622 | A2 | 11 June 2003 | EP | 1318622 | A3 | 10 December 2003 |
| | | | | CA | 2413439 | A1 | 05 June 2003 |
| | | | | US | 6839129 | B1 | 04 January 2005 |
| US | 6204924 | B1 | 20 March 2001 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811449784